# EUROPÄISCHE PATENTSCHRIFT

(11) **EP 3 135 439 B1**
(45) Veröffentlichungstag und Bekanntmachung des Hinweises auf die Patenterteilung: **20.04.2022**
(21) Anmeldenummer: 16182415.6
(22) Anmeldetag: 02.08.2016
(51) Int. Cl.: B25F 5/00, B24B 23/04, B23D 61/00

(54) **ADAPTERSYSTEM ZUR BEFESTIGUNG EINES WERKZEUGES AN EINEM OSZILLIEREND ANTREIBBAREN ANTRIEBSABSCHNITT**
ADAPTER SYSTEM FOR FIXING A TOOL TO AN OSCILLATING DRIVABLE DRIVE SECTION
SYSTEME D'ADAPTATEUR DESTINE A FIXER UN OUTIL SUR UNE SECTION A ENTRAINEMENT OSCILLANT

(30) Priorität: 24.08.2015 DE 102015114028
(43) Veröffentlichungstag der Anmeldung: 01.03.2017
(73) Patentinhaber: Wolfcraft GmbH, 56746 Kempenich (DE)
(72) Erfinder: Schlich, Thomas, 53534 Hoffeld (DE); Schüller, Hans-Jürgen, 53426 Königsfeld (DE); Noniewicz, Zbigniew, 56746 Kempenich (DE)
(74) Vertreter: Grundmann, Dirk

(56) Entgegenhaltungen:
- WO-A1-2014/159025
- DE-A1-102011 005 821
- US-A- 5 263 972

## Beschreibung

### Gebiet der Technik

Die Erfindung betrifft ein Befestigungssystem zum Befestigen eines Abtriebsprofilabschnitts eines Werkzeuges an einem von einem Motor um eine Drehachse in eine oszillierende Drehbewegung bringbaren Antriebsprofilabschnitt einer Handwerkzeugmaschine, sowie das Werkzeug als solches sowie das Werkzeug als solches und eine Verwendung des Werkzeuges.

### Stand der Technik

Die DE 10 2004 050 798 A1 beschreibt eine Handwerkzeugmaschine mit einem Antriebsprofilabschnitt, welcher sich von einem Motor um eine Drehachse in eine oszillierende Drehbewegung bringen lässt. Der Antriebsprofilabschnitt besitzt eine Auflagefläche, von der in gleichmäßiger Winkelverteilung und identischem Radialabstand zur Drehachse Mitnahmevorsprünge abragen. Diese auf einem Kreis angeordneten Mitnahmevorsprünge können in Nischen eines Abtriebsprofilabschnitts eines flachen Werkzeuges eingreifen. Das Werkzeug besitzt zwei sich gegenüberliegende Enden, wobei ein Ende den Abtriebsprofilabschnitt und das andere Ende eine Sägeverzahnung aufweist. Die Befestigung des Werkzeuges am Handwerkzeug erfolgt über eine Spannschraube, die einen Spannkopf aufweist. Der Schaft der Spannschraube wird durch eine zentrale Öffnung des Abtriebsprofilabschnitts hindurchgesteckt und in ein zentrales Innengewinde des Antriebsprofilabschnitts eingeschraubt, bis eine Spannflanke des Spannkopfes auf dem Rand der Öffnung des Abtriebsprofilabschnitts aufliegt.

Aus der WO 2011/159683 A1 ist ein Befestigungssystem bekannt, bei dem der Abtriebsprofilabschnitt ein Fenster mit einer relativ großen Fensterfläche aufweist. Das Fenster ist zum freien Ende des Werkzeuges hin offen, so dass der Abtriebsprofilabschnitt bei gelöster Spannschraube radial aufsteckbar ist.

Die DE 20 2011 000 517 U1 beschreibt einen Adapterring zur Befestigung eines Abtriebsprofilabschnitts an einem Antriebsprofilabschnitt einer Handwerkzeugmaschine, wobei der Adapterring einen durchmessergroßen Rand und einen durchmesserkleinen Rand aufweist und der Rand der von dem durchmesserkleinen Rand umgebenen Öffnung von einer Spannflanke eines Spannkopfes beaufschlagbar ist.

Die DE 10 2011 005 821 A1 beschreibt ein Befestigungssystem zur Befestigung eines Oszillationssägeblatts mit einem in einem oszillierend antreibbaren Schaft angeordneten Spannelement, welches durch ein Fenster des Oszillationssägeblattes hindurchgreifen kann und in einer Spannstellung das Oszillationssägeblatt gegen eine Stirnfläche des Schaftes beaufschlagt.

Die WO 2014/159025 A1 beschreibt eine Oszillationssäge mit einem Schnellverschluss zum Wechseln des Oszillationssägeblatts. Dieses Dokument offenbart: Befestigungssystem zum Befestigen eines Abtriebsprofilabschnitts eines Werkzeuges an einem von einem Motor um eine Drehachse in eine oszillierende Drehbewegung bringbaren Antriebsprofilabschnitt einer Handwerkzeugmaschine , wobei der Antriebsprofilabschnitt in gleichmäßiger Winkelverteilung auf einer Kreisbogenlinie um die Drehachse angeordnete, von einem Auflagebereich axial abragende Mitnahmevorsprünge aufweist, wobei der Abtriebsprofilabschnitt ein Fenster mit einem Rand und in einem an den Rand angrenzenden Bereich angeordnete Nischen zum Eintritt der Mitnahmevorsprünge aufweist und als Flachstück ausgebildet ist, mit einer ersten Breitseite, die auf dem Auflagebereich aufliegt und einer dieser gegenüberliegenden zweiten Breitseite, die von einer Spannflanke eines konzentrisch zur Drehachse angeordneten Spannkopfes in Achsrichtung beaufschlagt wird, und wobei ein äußerer Rand eines Adapterelementes an der zweiten Breitseite anliegt, und wobei der Spannkopf durch eine vom inneren Rand des Adapterelementes umgebene Öffnung hindurchsteckbar ist.

Im Stand der Technik ist ferner eine Handwerkzeugmaschine bekannt, die einen Antriebsprofilabschnitt mit auf einer Kreisbogenlinie um die Drehachse angeordneten Mitnahmevorsprüngen aufweist. Parallel zur Drehachse ist ein exzentrisch zur Drehachse angeordneter Spannkopf mittels Spannmitteln in Richtung auf eine Auflagefläche beaufschlagbar. Das zugehörige Werkzeug besitzt einen Abtriebsprofilabschnitt mit einem in dessen Zentrum liegenden Fenster, dessen Durchmesser etwas größer ist als der des Spannkopfes, so dass der Spannkopf durch die Öffnung des runden Fensters hindurchsteckbar ist. Liegt die Breitseite des Abtriebsprofilabschnitts an der Auflagefläche an und sind die Mitnahmevorsprünge in die ihnen zugeordneten Nischen des Abtriebsprofilabschnitts eingeführt, so lässt sich mittels des Spannkopfes der Abtriebsprofilabschnitt gegen den Antriebsprofilabschnitt verspannen, wozu eine Spannflanke des Spannkopfes nur bereichsweise auf dem Rand des Fensters aufliegt.

Soll an einer derartigen Handwerkzeugmaschine ein Werkzeug verwendet werden, welches ein Fenster mit einer großen Fensterfläche aufweist bzw. bei dem das Fenster zum Ende des Werkzeuges hin offen ist, wird ein Adapterteil benötigt.

### Zusammenfassung der Erfindung

Der Erfindung liegt die Aufgabe zugrunde, ein gebrauchsvorteilhaftes Befestigungssystem und eine Verwendung des Befestigungssystems anzugeben.

Gelöst wird die Aufgabe durch die in den Ansprüchen angegebene Erfindung.

Zunächst und im Wesentlichen wird ein Befestigungssystem vorgeschlagen, um einen Abtriebsprofilabschnitt eines Werkzeuges an einem Antriebsprofilabschnitt einer Handwerkzeugmaschine zu befestigen. Der Antriebsprofilabschnitt besitzt in gleichmäßiger Winkelverteilung auf einer Kreisbogenlinie um die Drehachse angeordnete, sich von einem im Wesentlichen ebenen Auflagenbereich axial abragende Mitnahmevorsprünge. Dem Abtriebsprofilabschnitt ist darüber hinaus ein Spannkopf zugeordnet, der eine Spannflanke ausbildet. Der Spannkopf kann parallel zur Drehachse in eine Spannrichtung auf den Auflagebereich verlagert werden. Der Spannkopf besitzt eine Spannflanke. Bezogen auf eine Kreisbogenlinie um die Drehachse des Antriebsprofilabschnitts kann sich die wirksame Spannflanke nur auf einem Bogenabschnitt, der kleiner ist als 180 Grad erstrecken. Der Spannkopf kann hierzu in einer exzentrischen Position gegenüber der Drehachse angeordnet sein. Das Werkzeug besitzt einen Abtriebsprofilabschnitt mit einem Fenster, das von einem Fensterrand begrenzt ist. In dem an den Fensterrand angrenzenden Fensterrandbereich besitzt der Abtriebsprofilabschnitt zum Rand hin offene und/ oder geschlossene Nischen zum Eintritt der Mitnahmevorsprünge. Befinden sich die Mitnahmevorsprünge in den Nischen und liegt eine Breitseite des Abtriebsprofilabschnitts auf dem Auflagebereich auf, ist der Abtriebsprofilabschnitt gegenüber dem Antriebsprofilabschnitt zentriert. Das Fenster besitzt einen Grundriss, der im montierten Zustand die Spannflanke des Spannkopfes umgibt, so dass die Spannflanke nicht auf dem Rand des Fensters aufliegen kann. Sie liegt also vollständig innerhalb der Fensterfläche. Die Erfindung schlägt zur axialfesten Kopplung des Abtriebsprofilabschnitts mit dem Antriebsprofilabschnitt ein einfaches Adapterelement vor. Das Adapterelement besitzt einen Außenrand, der auf dem Rand des Fensters, also auf der Breitseitenfläche des Abtriebsprofilabschnitts aufliegen kann. Das Adapterelement besitzt einen Innenrand, auf dem sich die Spannflanke abstützen kann. In einer besonders bevorzugten Ausgestaltung ist der Durchmesser einer Öffnung, die von dem Innenrand umgeben ist so groß, dass der Spannkopf in Achsrichtung dort hindurchsteckbar ist. Dies erfolgt bei der Montage des Werkzeuges, wobei vor dem Verspannen das Adapterelement in Radialrichtung gegenüber dem Abtriebsprofilabschnitt bzw. dem Antriebsprofilabschnitt von einer Durchsteckstellung in eine Spannstellung verlagert werden muss, in welcher der Innenrand unter der Spannflanke liegt. In einer besonders bevorzugten Ausgestaltung wird das Adapterelement von einem kegelstumpfförmigen Federelement, insbesondere einer Tellerfeder ausgebildet, so dass der durchmessergroße bzw. Außenrand kraftübertragend auf der Breitseitenfläche des Abtriebsprofilabschnitts aufliegt und zwischen Breitseitenfläche und durchmesserkleinem bzw. Innenrand des Adapterelementes ein sich in Achsrichtung erstreckender Spalt verbleibt. Es ist ferner bevorzugt vorgesehen, dass der Rand des Fensters eine dem Arbeitsabschnitt des Werkzeugs gegenüberliegende Öffnung aufweist. Diese Öffnung kann eine Öffnungsweite aufweisen, die der Weite des Fensters entspricht. Handelt es sich bei dem Fenster um ein rundes Fenster, ist die Öffnungsweite im Wesentlichen der Durchmesser des Fensters. Das Adapterelement erstreckt sich über die Öffnung. Sein äußerer Rand kreuzt die Öffnung. In einer Weiterbildung der Erfindung ist vorgesehen, dass der Spannkopf an einer örtlich der Öffnung des Fensters zugeordneten Stelle am durchmesserkleinen Rand des Adapterelementes angreift. Eine einfache Montage des Werkzeuges ist insbesondere dann möglich, wenn der Grundriss des Spannkopfes vollständig innerhalb des Grundrisses des Fensters oder dessen Öffnung liegt, wenn der Abtriebsprofilabschnitt mit in die Nischen eingreifenden Mitnahmevorsprüngen auf dem Auflagebereich aufliegt. Der Abtriebsprofilabschnitt kann dann in einer nur axialen Bewegung auf den Antriebsprofilabschnitt aufgesetzt werden. Der Spannkopf muss dabei nicht vom Antriebsprofilabschnitt getrennt werden. Er braucht lediglich in eine Freigabestellung gebracht zu werden, in der er einen genügenden Axialabstand vom Auflagebereich besitzt. Der Spannkopf taucht bei der rein axialen Montage des Abtriebsprofilabschnitts durch das Fenster hindurch. In einem zweiten Montageschritt wird das Adapterelement über den Spannkopf gesteckt. Der Spannkopf taucht dabei durch die Öffnung des Adapterelementes hindurch. Nach dem Ende des zweiten Montageschrittes liegt der äußere Rand des Adapterstücks auf dem das Fenster umgebenden Rand der Breitseite des Abtriebsprofilabschnitts auf. In einem dritten Montageschritt wird das Adapterelement in Radialrichtung bezogen auf die Drehachse verlagert, bis ein Abschnitt des inneren Randes, also des Öffnungsrandes unterhalb der Spannflanke liegt. Durch einen axialen Zug auf einen Schaft, der in einer Antriebsachse des Antriebsprofiles liegt und der insbesondere materialeinheitlich mit dem Spannkopf verbunden ist, wird die Spannflanke in eine Spannstellung gebracht. Das Spannglied kann als Schraube ausgebildet sein, die mit einem Gewindeschaft in eine Gewindebohrung einschraubbar ist. In der Spannstellung wird das Adapterelement lediglich in einem Umfangsbereich in Axialrichtung kraftbeaufschlagt, wobei sich dieser Umfangsbereich bevorzugt über einen Azimutwinkel bezogen auf die Drehachse erstreckt, der kleiner als 180 Grad ist. Wenn das Adapterelement die bevorzugte Ausgestaltung als Tellerfeder aufweist, verteilt sich die exzentrisch in das Adapterelement eingebrachte Spannkraft auf den gesamten Umfang des durchmessergroßen Randes des Adapterelementes, welcher die Drehachse konzentrisch umgibt. Die Spannflanke kann deshalb an einem dem Arbeitsabschnitt des Werkzeuges gegenüberliegenden Bereich des Adapterelementes angreifen. Dieser Bereich kann azimutal dem Bereich der Öffnung des Fensters zugeordnet sein. Das Werkzeug kann in verschiedenen Drehstellungen dem Antriebsprofil zugeordnet werden. Die Materialstärke des Abtriebsprofilabschnitts kann geringer sein als die axiale Höhe der Mitnahmevorsprünge, so dass die Mitnahmevorsprünge die vom Adapterelement beaufschlagte Breitseite des Abtriebsprofilabschnitts überragen. Der Durchmesser des äußeren Randes des Adapterelementes ist bevorzugt geringer als der innere Durchmesser der mit den Mitnahmevorsprüngen besetzten Zone des Antriebsprofils, so dass der äußere Rand des Abtriebselementes im Bereich einer Kreisfläche liegt, die von den Mitnahmevorsprüngen umgeben ist. Die Mitnahmevorsprünge haben somit bevorzugt eine das Adapterelement zentrierende Funktion.

### Kurze Beschreibung der Zeichnungen

Im Folgenden wird die Erfindung anhand von Ausführungsbeispielen näher erläutert. Es zeigen:

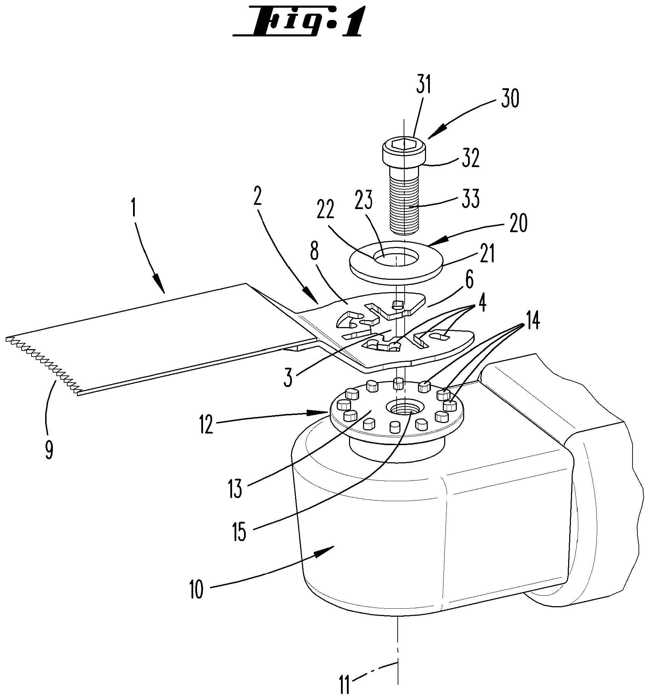

- Fig. 1: in einer Explosionsdarstellung den Antriebsprofilabschnitt 12 einer Handwerkzeugmaschine 10 mit einem zugeordneten Werkzeug 1 und dessen Abtriebsprofilabschnitt sowie einem Adapterelement 20 und einem Spannglied 30,
- Fig. 2: eine Darstellung gemäß Figur 1 jedoch im zusammengebauten Zustand,
- Fig. 3: eine Darstellung im zusammengebauten Zustand mit Blickrichtung auf die Breitseite 8 des Abtriebsprofilabschnitts 2,
- Fig. 4: den Schnitt gemäß der Linie IV - IV in Figur 3,
- Fig. 5: eine Draufsicht auf den Antriebsprofilabschnitt 12, wobei mit D₄ der Durchmesser eines von Mitnahmevorsprüngen 14 umgebenden Kreis um die Drehachse 11 bezeichnet ist,
- Fig. 6: den Abtriebsprofilabschnitt 2 des Werkzeuges 1 und dessen Fenster 3 mit einer Fensterweite W,
- Fig. 7: die Draufsicht auf das Adapterelement 20 dessen kreisrunder Außendurchmesser mit D₂ und dessen kreisrunder Innendurchmesser mit D₁ bezeichnet ist, und
- Fig. 8: das Spannglied 30 in der Ansicht, dessen rotationssymmetrischer Spannkopf 31 einen Durchmesser D₃ besitzt und eine umlaufende Spannflanke 32 ausbildet.

### Beschreibung der Ausführungsformen

Die Handwerkzeugmaschine 10 besitzt einen Elektromotor, der eine nicht dargestellte Antriebswelle antreibt, die über ein Winkelgetriebe einen Antriebsprofilabschnitt 12 um eine Drehachse 11 oszillierend antreibt. Der Antriebsprofilabschnitt 12 besitzt einen Auflagebereich 13, der im Wesentlichen eben ist. Im Ausführungsbeispiel wird der Auflagebereich 13 von einer Anlagefläche ausgebildet, zu der die Drehachse 11 senkrecht verläuft.

Aus dem Auflagebereich 13 entspringen zwölf in einer gleichmäßigen Winkelverteilung auf einem Kreis mit einem Durchmesser D₄ um die Drehachse 11 angeordnete Mitnahmevorsprünge 14.

Es ist ein Spannglied 30 vorgesehen, welches einen Spannkopf 31 und eine Spannflanke 32 aufweist. Ein mit dem Spannkopf 31 fest verbundener Schaft 33 greift in eine Öffnung 15 des Antriebsprofilabschnittes 12 ein. Das Spannglied 30 bzw. die Öffnung 15 sind so ausgebildet bzw. angeordnet, dass der Spannkopf 31 eine Spannflanke 32 ausbildet, deren wirksamer Abschnitt exzentrisch zur Drehachse 11 angeordnet ist. Die Spannflanke 32 erstreckt sich als Ringfläche auf einem Vollkreis um die Achse des Spanngliedes. Sie bildet eine wirksame Spannflanke 32, die sich auf einem azimutalen Bereich zur Drehachse 11 erstreckt, der geringer ist als 180 Grad. Beim Ausführungsbeispiel erstreckt sich die wirksame Spannflanke 32 auf einem azimutalen Bereich, der etwa 90 Grad beträgt. Hierzu ist die Spannflanke 32 einem Spannkopf 31 zugeordnet, der einen kreisrunden Querschnitt aufweist, aber exzentrisch zur Drehachse 11 angeordnet ist. Der mit einem Außengewinde ausgestattete Schaft 33 steckt in einer exzentrischen Innengewindebohrung 15. Es ist aber auch vorgesehen, dass der Schaft 33 in einer Öffnung des Antriebsprofilabschnitts 12 steckt, die konzentrisch zur Drehachse 11 verläuft. Bei einer derartigen Ausgestaltung kann der Spannkopf 31 exzentrisch zum Schaft 33 angeordnet sein. Der Schaft kann hier ein Zugschaft sein. Hier kann der Spannkopf 31 eine dem Auflagebereich 13 gegenüberliegende Spannflanke 32 ausbilden, die sich nur entlang eines Kreisbogenabschnitts erstreckt. Es reicht aus, wenn sich die Spannflanke 32 bezogen auf eine Kreisbodenlinie um die Drehachse 11 nur maximal über einen Azimutwinkel von 180 Grad, bevorzugt etwa 90 Grad oder kleiner 90 Grad erstreckt.

Das Werkzeug 1 besitzt einen Abtriebsprofilabschnitt 2, der eine Vielzahl von Nischen 4 ausbildet. Die Nischen 4 sind derart ausgebildet, dass zumindest einige der Mitnahmevorsprünge 14 den Abtriebsprofilabschnitt 2 zur Drehachse 11 zentrierend und den Abtriebsprofilabschnitt 2 an den Antriebsprofilabschnitt 12 in zugeordnete Nischen 4 eintauchen. Die Nischen können ringsumschlossene Öffnungen sein. Die Nischen können aber auch zum Fenster hin geöffnet sein. Der Abtriebsprofilabschnitt 2 ist als Flachkörper ausgebildet. Er besitzt eine zum Auflagebereich 13 weisende Breitseite 7, die beim Ausführungsbeispiel flächig an der vom Auflagebereich 13 ausgebildeten Anlagefläche anliegen kann.

Der ersten Breitseite 7 liegt eine zweite Breitseite 8 gegenüber. Die Materialstärke des Flachabschnitts, also der Abstand der beiden Breitseiten 7, 8 ist geringer als die axiale Höhe der Mitnahmevorsprünge 14, so dass die Mitnahmevorsprünge 14 bei einem montierten Werkzeug über die zweite Breitseite 8 hinausragen.

Im radialen Abstand bezogen auf das Drehzentrum des Abtriebsprofilabschnitts 2 befindet sich ein Arbeitsabschnitt 9. Der Arbeitsabschnitt 9 kann als Schneide, als Säge oder anders abrasiv ausgestaltet sein. Durch die oszillierende Antriebsbewegung des Antriebsprofilabschnitts 12 wird der Arbeitsabschnitt 9 in eine oszillierende hin und her Bewegung angetrieben.

Die Nischen 4 sind in einer Zone des Abtriebsprofilabschnitts 2 angeordnet, die ein Fenster 3 des Abtriebsprofilabschnitts 2 umgibt. Das Fenster 3 besitzt eine Weite W, die größer ist als der Durchmesser D₃ des Spannkopfes 31. Der Rand des Fensters 5 verläuft auf einer gedachten Kreisbogenlinie. Diese Kreisbogenlinie umschließt eine Kreisbogenfläche, in der im montierten Zustand, wenn die Mitnahmevorsprünge 14 in die ihnen zugeordneten Nischen 4 eingetreten sind, vollständig den Spannkopf 31 aufnimmt. Die Querschnittsfläche des Spannkopfes 31 liegt somit innerhalb dieser Kreisbogenfläche.

Der Abtriebsprofilabschnitt 2 lässt sich somit in einer streng axialen Richtung bezogen auf die Drehachse 11 auf den Antriebsprofilabschnitt 12 aufsetzen, wobei in einer x-beliebigen Drehstellung des Abtriebsprofilabschnitts 2 der Spannkopf 31 durch das Fenster 3 hindurchtaucht. Der Abtriebsprofilabschnitt 2 kann in zwölf verschiedenen Winkelstellung formschlüssig auf den Antriebsprofilabschnitt 12 aufgesetzt werden.

Beim Ausführungsbeispiel besitzt das Fenster 3 eine dem Arbeitsabschnitt 9 gegenüberliegende Öffnung 6. Die Fensteröffnung 6 kann aber auch an einer anderen Umfangs stelle des Fensters 3 angeordnet sein. Die Weite der Öffnung 6 entspricht der Fensterweite W.

Die Nischen 4 des Abtriebsprofilabschnitts 2 sind derart angeordnet, dass das Werkzeug 1 auch an Werkzeugmaschinen verwendet werden kann, deren Antriebsprofilabschnitt anders ausgebildet ist, beispielsweise eine durchmessergroße zentrische Öffnung besitzt, in der eine durchmessergroße zentrische Spannschraube steckt. Der Schaft dieser Spannschraube kann durch die Öffnung 6 in das Fenster 3 eintreten.

Das Werkzeug 1 kann an einem Antriebsprofilabschnitt 12 verwendet werden, wie er oben im Detail beschrieben ist, also welcher einen exzentrisch zur Drehachse 11 angeordneten Spannkopf 31 mit verhältnismäßig kleinem Durchmesser D₃ aufweist, wobei der Durchmesser D₃ kleiner ist als die Weite des Fensters W und insbesondere der Spannkopf 31 in einer zur Drehachse 11 zentrischen Kreisfläche auf dem Antriebsprofilabschnitt 12 angeordnet ist, der im montierten Zustand des Werkzeuges 1 innerhalb des Fensters 3 liegt.

Erfindungsgemäß ist hierzu ein Adapterelement 20 vorgesehen, welches einen äußeren Rand 21 aufweist. Dieser äußere Rand 21 ist ein durchmessergroßer Rand eines im Wesentlichen kreisscheibenförmigen Adapterelementes 20, welches eine zentrale Öffnung 23 aufweist, die von einem durchmesserkleinen Rand 22 umgeben ist. Das Adapterelement 20 hat eine im Wesentlichen kegelstumpfförmige Gestalt. Es wird mit einer zur Breitseite 8 hin weisenden Kegelbasis auf den Abtriebsprofilabschnitt 2 aufgesetzt. Die Öffnung 23 besitzt einen Durchmesser D₁, der größer ist als der Durchmesser D₃ des Spannkopfes 31, so dass der Spannkopf 31 beim Aufsetzen des Adapterelementes 20 auf den Abtriebsprofilabschnitt 20 durch die Öffnung 23 hindurchtauchen kann. Im aufgesetzten Zustand liegt der äußere Rand 21 auf einem Rand 5 des Fensters 3 auf. Er beaufschlagt somit die Breitseite 7. Der Außendurchmesser D₂ des Adapterelementes 20 ist geringer als der Durchmesser D₄ der Kreisbogenfläche, die von den Mitnahmevorsprüngen 14 umgeben ist. Die über die Breitseite 8 hinausragenden Endabschnitte der Mitnahmevorsprünge 14 haben somit eine zentrierende Funktion betreffend das Adapterelement 20.

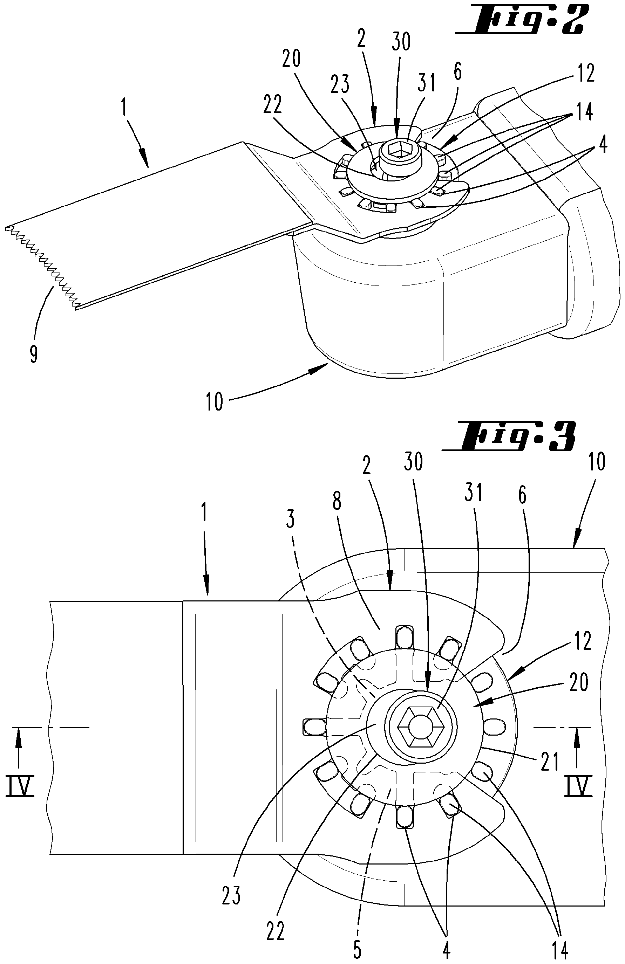

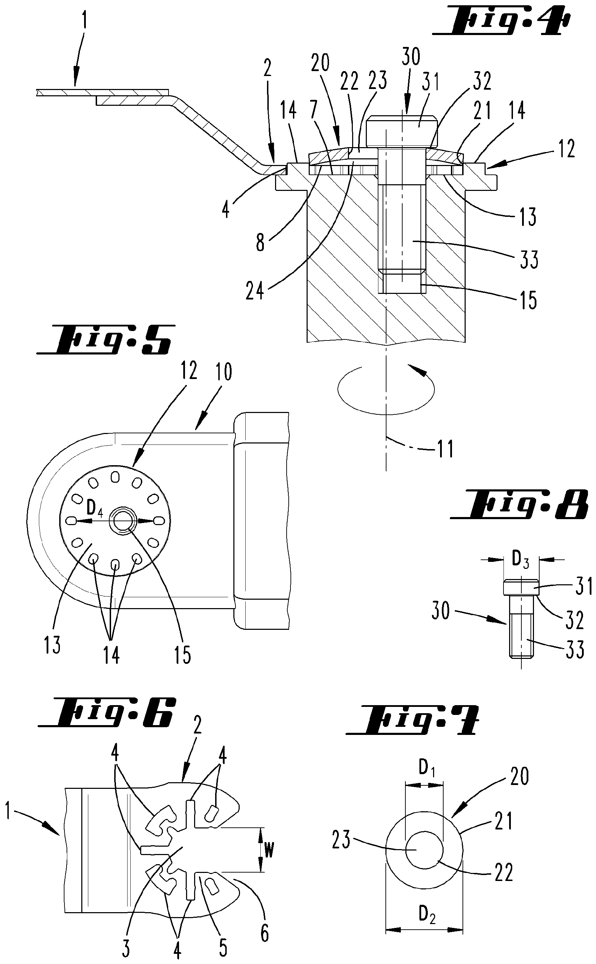

Ist das Adapterelement 20 nach dem Aufstecken auf das Spannglied 30 in Radialrichtung auf die Drehachse 11 in eine zentrische Position gebracht worden, wie sie die Figuren 2, 3 und 4 zeigt, greift die Spannflanke 32, die vom Spannkopf 31 gebildet ist, und die dem Auflagebereich 13 gegenüberliegt, am Rand 22 der Öffnung 23 an. Die Spannflanke 32 greift dabei maximal auf der halben Kreisbogenlänge des kreisförmigen Öffnungsrandes 22 an. Die Öffnung 22 liegt in einer bezogen auf die Drehachse 11 versetzt zur Breitseitenebene 8 verlaufenden Ebene, so dass sich zwischen dem durchmesserkleinen Rand 22 und der Breitseite 8 ein Spaltraum 24 ausbildet. Wird der Schaft 33 des Spangliedes 30 in Axialrichtung verlagert, was beim Ausführungsbeispiel durch Drehen des als Schraubenkopf ausgebildeten Spannkopfes 31 durchgeführt werden kann, so verformt sich das Adapterelement 20 elastisch über seine gesamte Umfangserstreckung, so dass über die gesamte Umfangslänge der durchmessergroße Rand 21 eine Spannkraft auf die Breitseite 8 des Abtriebsprofilabschnitts 2 ausübt.

Das Adapterelement 20 besitzt bevorzugt eine Rotationssymmetrie. Zur Montage wird das Adapterelement 20 über den Spannkopf 31 gestülpt, der zumindest auf seiner von der Drehachse 11 wegweisenden Seite eine Spannflanke 32 aufweist. Anschließend wird das Adapterelement 20 in Richtung auf die Drehachse 11 verschoben, so dass ein Abschnitt des Innenrandes 22 unter die Spannflanke 32 gelangt. Die Spannflanke 32 ist eine Fläche, die dem Auflagebereich 13 gegenüber liegt. Im Ausführungsbeispiel besitzt das Adapterelement 20 in seiner das Werkzeug 1 an der Handwerkzeugmaschine 10 fixierenden Stellung eine zentrierte Position gegenüber der Drehachse 11. Das Adapterelement 20 kann aber auch in einer exzentrischen Lage zur Drehachse 11 seine Spannfunktion entfalten.

### Liste der Bezugszeichen

| | | | |
|---|---|---|---|
| 1 | Werkzeug | | |
| 2 | Abtriebsprofilabschnitt | | |
| 3 | Fenster | | |
| 4 | Nische | 30 | Spannglied |
| 5 | Rand des Fensters | 31 | Spannkopf |
| 6 | Öffnung | 32 | Spannflanke |
| 7 | Breitseite | 33 | Schaft |
| 8 | Breitseite | | |
| 9 | Arbeitsabschnitt | | |
| 10 | Handwerkzeugmaschine | | |
| 11 | Drehachse | | |
| 12 | Antriebsprofilabschnitt | D₁ | Innendurchmesser |
| 13 | Auflagebereich | D₂ | Außendurchmesser |
| 14 | Mitnahmevorsprung | D₃ | Durchmesser |
| 15 | Aufnahmeöffnung | D₄ | Durchmesser |
| | | W | Fensterweite |
| 20 | Adapterelement | | |
| 21 | durchmessergroßer Rand | | |
| 22 | durchmesserkleiner Rand | | |
| 23 | Öffnung | | |
| 24 | Spaltraum | | |

## Patentansprüche

1. Befestigungssystem zum Befestigen eines Abtriebsprofilabschnitts (2) eines Werkzeuges (1) an einem von einem Motor um eine Drehachse (11) in eine oszillierende Drehbewegung bringbaren Antriebsprofilabschnitt (12) einer Handwerkzeugmaschine (10), wobei der Antriebsprofilabschnitt (12) in gleichmäßiger Winkelverteilung auf einer Kreisbogenlinie um die Drehachse (11) angeordnete, von einem Auflagebereich (13) axial abragende Mitnahmevorsprünge (14) aufweist, wobei der Abtriebsprofilabschnitt (2) ein Fenster (3) mit einem Rand (5) und in einem an den Rand (5) angrenzenden Bereich angeordnete Nischen (4) zum Eintritt der Mitnahmevorsprünge (14) aufweist und als Flachstück ausgebildet ist, mit einer ersten Breitseite (7), die auf dem Auflagebereich (13) aufliegt und einer dieser gegenüberliegenden zweiten Breitseite (8), die von einer Spannflanke (32) eines exzentrisch zur Drehachse (11) angeordneten Spannkopfes (31) in Achsrichtung beaufschlagt wird, wobei ein äußerer Rand (21) eines Adapterelementes (20) an der zweiten Breitseite (8) anliegt, wobei der innere Rand (22) nur auf maximal seiner halben Umfangslänge von der Spannflanke (32) beaufschlagt wird und der Spannkopf (31) durch eine vom inneren Rand (22) umgebene Öffnung (23) hindurchsteckbar ist.

2. Befestigungssystem nach Anspruch 1, **dadurch gekennzeichnet, dass** das Adapterelement (20) ein kegelstumpfförmiges Federelement, insbesondere eine Tellerfeder ist.

3. Befestigungssystem nach Anspruch 1 oder 2, **dadurch gekennzeichnet, dass** der Rand (5) des Fensters (3) eine insbesondere einem Arbeitsabschnitt (9) des Werkzeuges (1) gegenüberliegende Öffnung (6) aufweist, über welche sich im montierten Zustand ein Abschnitt des durchmessergroßen Randes (21) erstreckt.

4. Befestigungssystem nach Anspruch 3, **dadurch gekennzeichnet, dass** der Spannkopf (31) an einer örtlich der Öffnung (6) des Fensters (3) zugeordneten Stelle am inneren Rand (22) angreift.

5. Befestigungssystem nach einem der Ansprüche 1 bis 4, **dadurch gekennzeichnet, dass** der Grundriss des Spannkopfes (21) vollständig innerhalb des Grundrisses des Fensters (3) oder dessen Öffnung (6) liegt, wenn der Abtriebsprofilabschnitt (2) mit in die Nischen (14) eingreifenden Mitnahmevorsprüngen (4) auf dem Auflagebereich (13) aufliegt.

6. Befestigungssystem nach einem der Ansprüche 1 bis 5, **dadurch gekennzeichnet, dass** der Außendurchmesser (D₂) des Adapterelementes (20) kleiner ist als der Durchmesser (D₄) eines von den Mitnahmevorsprüngen (14) umgebenen freien Kreis des Auflagebereichs (13).

7. Befestigungssystem nach einem der Ansprüche 1 bis 6, **dadurch gekennzeichnet, dass** der Abtriebsprofilabschnitt (2) an einem Ende des Werkzeugs (1) und ein eine Sägeverzahnung aufweisender Arbeitsabschnitt (9) am anderen Ende des Werkzeugs (1) angeordnet ist.

8. Verwendung eines Befestigungssystems gemäß einem der Ansprüche 1 bis 7 an einer Handwerksmaschine (10), die einen von einem Motor um eine Drehachse (11) in eine oszillierende Drehbewegung bringbaren Antriebsprofilabschnitt (12) aufweist, wobei der Antriebsprofilabschnitt (12) in gleichmäßiger Winkelverteilung auf einer Kreisbogenlinie um die Drehachse (11) angeordnete, von einem Auflagebereich (13) axial abragende Mitnahmevorsprünge (14) aufweist, die in Nischen (4) des Abtriebsprofilabschnitts (2) eingreifen, wobei die erste Breitseite (7) des Antriebsprofilabschnitts (12) auf dem Auflagebereich (13) aufliegt und sich der äußere Rand (21) des Adapterelementes (20) auf der zweiten Breitseite (8) abstützt und eine Spannflanke (32) eines exzentrisch zur Drehachse (11) angeordneten Spannkopfes (31) den inneren Rand (22) des Adapterelementes (20) nur auf maximal seiner halben Umfangslänge beaufschlagt, wobei der Spannkopf (31) bei der Montage des Adapterelementes (20) durch die Öffnung (23) hindurchgesteckt wird.

9. Verwendung nach Anspruch 8, **dadurch gekennzeichnet, dass** das Adapterelement (20) nach dem Hindurchstecken des Spannkopfes (31) in Radialrichtung bezogen auf die Drehachse (11) verlagert wird, bis ein Abschnitt des inneren Randes (22) unterhalb der Spannflanke (32) liegt.

## Claims

1. Fastening system for fastening a driven profile portion (2) of a tool (1) to a drive profile portion (12) of a hand-held power tool (10), which drive profile portion can be brought into an oscillating rotational movement about an axis of rotation (11) by a motor, wherein the drive profile portion (12) has entraining projections (14) which are arranged so as to have a uniform angular distribution on a circular-arc line about the axis of rotation (11) and protrude axially from a support region (13), wherein the driven profile portion (2) has a window (3) having an edge (5) and having recesses (4) which are arranged in a region adjoining the edge (5) and are intended for the entry of the entraining projections (14), and is in the form of a flat piece, with a first broad side (7) which rests on the support region (13) and a second broad side (8) opposite thereto, which second broad side is acted upon in the axial direction by a clamping flank (32) of a clamping head (31) arranged eccentrically to the axis of rotation (11), wherein an outer edge (21) of an adapter element (20) rests against the second broad side (8), wherein the inner edge (22) is acted upon by the clamping flank (32) over only a maximum of half its circumferential length, and the clamping head (31) can be pushed through an opening (23) surrounded by the inner edge (22).

2. Fastening system according to claim 1, **characterised in that** the adapter element (20) is a frustoconical spring element, in particular a disc spring.

3. Fastening system according to either claim 1 or claim 2, **characterised in that** the edge (5) of the window (3) has an opening (6) which is in particular opposite a working portion (9) of the tool (1) and through which a portion of the large-diameter edge (21) extends in the mounted state.

4. Fastening system according to claim 3, **characterised in that** the clamping head (31) engages on the inner edge (22) at a point which is assigned locally to the opening (6) of the window (3).

5. Fastening system according to any of claims 1 to 4, **characterised in that** the outline of the clamping head (21) lies completely within the outline of the window (3) or the opening (6) thereof when the driven profile portion (2) rests on the support region (13) by means of entraining projections (4) engaging in the recesses (14).

6. Fastening system according to any of claims 1 to 5, **characterised in that** the outside diameter (D₂) of the adapter element (20) is smaller than the diameter (D₄) of a free circle of the support region (13), which free circle is surrounded by the entraining projections (14).

7. Fastening system according to any of claims 1 to 6, **characterised in that** the driven profile portion (2) is arranged at one end of the tool (1) and a working portion (9) having saw teeth is arranged at the other end of the tool (1).

8. Use of a fastening system according to any of claims 1 to 7 on a hand-held power tool (10) which has a drive profile portion (12) that can be brought into an oscillating rotational movement about an axis of rotation (11) by a motor, wherein the drive profile portion (12) has entraining projections (14) which are arranged so as to have a uniform angular distribution on a circular-arc line about the axis of rotation (11), protrude axially from a support region (13), and engage in recesses (4) in the driven profile portion (2), wherein the first broad side (7) of the drive profile portion (12) rests on the support region (13) and the outer edge (21) of the adapter element (20) is supported on the second broad side (8), and a clamping flank (32) of a clamping head (31) arranged eccentrically to the axis of rotation (11) acts on the inner edge (22) of the adapter element (20) over only a maximum of half its circumferential length, wherein the clamping head (31) can be pushed through the opening (23) when the adapter element (20) is mounted.

9. Use according to claim 8, **characterised in that** after the clamping head (31) has been pushed through, the adapter element (20) is shifted in the radial direction in relation to the axis of rotation (11) until a portion of the inner edge (22) lies below the clamping flank (32).

## Revendications

1. Système de fixation pour fixer une partie profilée menée (2) d'un outil (1) à une partie profilée d'entrainement (12) d'une machine-outil à main (10) pouvant être amenée par un moteur à effectuer un mouvement de rotation oscillant autour d'un axe de rotation (11), dans lequel la partie profilée d'entraînement (12) présente des saillies d'entraînement (14) agencées selon une répartition angulaire régulière sur une ligne en arc de cercle autour de l'axe de rotation (11) et faisant saillie axialement d'une zone d'appui (13), dans lequel la partie profilée menée (2) présente une fenêtre (3) avec un bord (5) et des niches (4) agencées dans une zone adjacente au bord (5) pour l'entrée des saillies d'entraînement (14) et est réalisée sous forme de pièce plate, avec un premier côté large (7) qui repose sur la zone d'appui (13) et un deuxième côté large (8) opposé à celui-ci, qui est sollicité dans la direction axiale par un flanc de serrage (32) d'une tête de serrage (31) agencée de manière excentrée par rapport à l'axe de rotation (11), dans lequel un bord extérieur (21) d'un élément adaptateur (20) est en appui contre le deuxième côté large (8), le flanc de serrage(32) n'agissant sur le bord intérieur (22) que, au maximum, sur la moitié de sa longueur périphérique et la tête de serrage (31) pouvant être passée à travers une ouverture (23) entourée par le bord intérieur (22).

2. Système de fixation selon la revendication 1, **caractérisé en ce que** l'élément adaptateur (20) est un élément élastique tronconique, en particulier une rondelle-ressort.

3. Système de fixation selon la revendication 1 ou 2, **caractérisé en ce que** le bord (5) de la fenêtre (3) présente une ouverture (6), en particulier, à l'opposé d'une partie de travail (9) de l'outil (1) et sur laquelle s'étend, à l'état monté, une partie du bord de grand diamètre (21).

4. Système de fixation selon la revendication 3, **caractérisé en ce que** la tête de serrage (31) vient en engagement avec le bord intérieur (22) à un endroit localement associé à l'ouverture (6) de la fenêtre (3).

5. Système de fixation selon l'une des revendications 1 à 4, **caractérisé en ce que** le tracé de base de la tête de serrage (21) est entièrement situé à l'intérieur du tracé de base de la fenêtre (3) ou de son ouverture (6) lorsque la partie profilée menée (2) repose sur la zone d'appui (13) avec des saillies d'entraînement (4) engagées dans les niches (14).

6. Système de fixation selon l'une des revendications 1 à 5, **caractérisé en ce que** le diamètre extérieur (D₂) de l'élément adaptateur (20) est inférieur au diamètre (D₄) d'un cercle libre de la zone d'appui (13) entouré par les saillies d'entraînement (14).

7. Système de fixation selon l'une des revendications 1 à 6, **caractérisé en ce que** la partie profilée menée (2) est agencée à une extrémité de l'outil (1) et une partie de travail (9) présentant une denture de scie est agencée à l'autre extrémité de l'outil (1).

8. Utilisation d'un système de fixation selon l'une des revendications 1 à 7 sur une machine-outil à main (10) qui présente une partie profilée d'entraînement (12) pouvant être amenée par un moteur à effectuer un mouvement de rotation oscillant autour d'un axe de rotation (11), la partie profilée d'entraînement (12) présentant des saillies d'entraînement (14) agencées selon une répartition angulaire régulière sur une ligne en arc de cercle autour de l'axe de rotation (11) et faisant saillie axialement d'une zone d'appui (13), qui s'engagent dans des niches (4) de la partie profilée menée (2), le premier côté large (7) de la partie profilée d'entraînement (12) reposant sur la zone d'appui (13) et le bord extérieur (21) de l'élément adaptateur (20) s'appuyant sur le deuxième côté large (8) et un flanc de serrage (32) d'une tête de serrage (31) agencée de manière excentrée par rapport à l'axe de rotation (11) n'agissant sur le bord intérieur (22) de l'élément adaptateur (20) que, au maximum, sur la moitié de sa longueur périphérique, la tête de serrage (31) étant passée à travers l'ouverture (23) lors du montage de l'élément adaptateur (20).

9. Utilisation selon la revendication 8, **caractérisée en ce que**, après avoir passée à travers la tête de serrage (31), l'élément adaptateur (20) est déplacé dans la direction radiale par rapport à l'axe de rotation (11) jusqu'à ce qu'une partie du bord intérieur (22) se trouve en dessous du flanc de serrage (32).
